# EUROPEAN PATENT APPLICATION

(11) **EP 1 686 800 A2**
(43) Date of publication of application: **02.08.2006**
(21) Application number: 06250473.3
(22) Date of filing: 27.01.2006
(51) Int. Cl.: H04N 5/46

(54) **Broadcast receiver with an automatic preset**

(30) Priority: 28.01.2005 JP 2005022178
(71) Applicant: ORION ELECTRIC CO., Ltd., Takefu-City, Fukui 915-8555 (JP)
(72) Inventor: Mori, Masaaki, Orion Electr. Co., Ltd., Echizen-city Fukui 915-8555 (JP)
(74) Representative: Paget, Hugh Charles Edward

(57) **Abstract**

To reduce a time required for auto preset operation by using a plurality of tuners, and to enable a user to view a detected program even if auto preset process is under way. When auto preset operation starts, a control unit 5 controls mounted two tuners 3a and 3b to perform channel searching simultaneously. One of the tuners 3a performs channel searching of terrestrial analog broadcasting and the other tuner 3b performs channel searching of terrestrial digital broadcasting. As channel searching by the tuner 3b takes a processing time longer than that of channel searching of analog broadcasting by the tuner 3a, a user can view a broadcast program which can be received by reading preset information on analog broadcasting written in a non-volatile memory 9 when the tuner 3a completes channel searching.

## Description

### BACKGROUND OF THE INVENTION

### Field of the Invention

The present invention relates to a broadcast receiver with an auto preset function with plural electronic tuning type tuners which can receive broadcast signals different in broadcasting system and/or broadcasting mode including terrestrial analog broadcasting, terrestrial digital broadcasting, analog broadcasting or digital broadcasting by cable television, and satellite broadcasting, which stores broadcast signals received by the tuners in storage means and selects a desired channel based on preset information stored in the storage means.

### Description of the Related Art

A broadcast receiver with an electronic tuning type tuners (hereinafter referred to as tuners) such as a television receiver has a channel automatic searching, which is so-called auto preset function, by the tuners to search presence/ absence of broadcast signals, record (preset) received channel data into storage means such as non-volatile memory, read data of a designated (selected) channel from the memory, control receiver frequencies of the tuners and receive television broadcasting or the like. With the auto preset function, the broadcast receiver can receive signals for a selected channel number by controlling channel selecting operation of a tuner based on the preset information stored in the non-volatile memory, and a user can serially select only a channel to be used and easily select a desired channel by operating a channel up key or a channel down key.

As broadcasting systems have been diversified, various kinds of broadcasting such as terrestrial analog broadcasting, cable television and satellite broadcasting have been available and the number of channels (the number of broadcast stations) available for an audience to select has been dramatically increasing. For example, for the number of broadcast stations of terrestrial digital broadcasting, more than a hundred channels can be reserved. Accordingly, as the number of channels available for an audience to select increases, a processing time of the auto preset operation become longer. As a factor, terrestrial digital broadcasting is mixed with analog broadcasting within broadcasting frequencies determined by broadcast stations, which results in longer time for searching only the terrestrial digital broadcasting channels and in presetting terrestrial digital broadcasting channels. Many models for a television receiver have been developed with a recording function or a function of simultaneously displaying a plurality of broadcast programs. The television receivers with such functions has a tuner for realizing a recording function or a function of simultaneously displaying plurality of broadcast programs separately from a tuner for displaying the program of a channel selected by a user. Japanese Patent Laid-Open Publication No. 10-150346 (Patent Document 1) proposes an auto preset device adapted to perform channel searching alternately by using tuners which are separately provided for the television receiver with a plurality of tuners and store (preset) the received channel selection data.

An auto preset device described in the Patent Document 1 can reduce a waiting time for frequencies to be stabilized in each channel to half in such a case of presetting by a tuner, which enables quick preset. Even if channel searching has completed at a tuner while the auto preset operation is being performed, however, a user cannot view a broadcast program based on the completed preset information. Therefore, the auto preset device has a problem of degrading user convenience by requiring a user of an unnecessary waiting time because a user cannot view a broadcast program until a plurality of tuners complete channel searching.

### SUMMARY OF THE INVENTION

The present invention intends to provide a broadcast receiver with an auto preset function which reduces a time required for auto preset operation by using a plurality of tuners and enables a user to view a detected program while the auto preset process is being performed.

A broadcast receiver with an auto preset function according to claim 1 is a broadcast receiver including a plurality of electronic tuning type tuners which can receive broadcast signals different in broadcasting system and/or broadcasting mode such as terrestrial analog broadcasting, terrestrial digital broadcasting, analog broadcasting or digital broadcasting by cable television, and satellite broadcasting, and having an auto preset function for storing broadcast signals received by the tuners in storage means and selecting a desired channel based on preset information stored in the storage means characterized by including control means for controlling each of said tuners, wherein the control means controls said tuners to receive the broadcast signals different in broadcasting system and/or broadcasting mode respectively; and wherein the tuners are controlled to almost simultaneously perform channel searching, and when one of said tuners completes channel searching, the preset information is stored in storage means, and when the other channel searching continues, a broadcast program available for a user to select based on the preset information on the completed channel searching can be viewed.

According to the configuration described in claim 1, a control unit makes a tuner to perform channel searching of terrestrial analog broadcasting and makes another tuner to perform channel searching of a cable television (digital broadcasting) or terrestrial digital broadcasting, for example. In this manner, the tuners can search all the broadcasting channels of terrestrial analog broadcasting, a cable television (digital broadcasting) and terrestrial digital broadcasting. As the number of channels for broadcast stations is more than a hundred in terrestrial digital broadcasting, channel searching takes longer time in terrestrial digital broadcasting than in terrestrial analog broadcasting. Accordingly, channel searching of terrestrial analog broadcasting completes faster than that of terrestrial digital broadcasting. As such, when channel searching of terrestrial analog broadcasting, which completes faster than that of terrestrial digital broadcasting, completes, the preset information is written in the storage means. By reading the preset information on terrestrial analog broadcasting stored in storage means when terrestrial analog broadcasting channels are preset like this, the broadcast receiver controls a tuner which performed channel searching of terrestrial analog broadcasting and displays video which can be received by the tuner on a display unit. When another tuner completes channel searching of terrestrial digital broadcasting, for example afterward, preset information on the terrestrial digital broadcasting is written in storage means and channel searching of all the broadcasting channels of terrestrial analog broadcasting and terrestrial digital broadcasting completes. The broadcast receiver enables a user to select a desired channel from all the broadcasting channels of terrestrial analog broadcasting and terrestrial digital broadcasting and display the video on the display unit, by reading the preset information on terrestrial analog broadcasting and terrestrial digital broadcasting stored in the storage means afterward.

A broadcast receiver with an auto preset function according to claim 2 is a broadcast receiver including a plurality of electronic tuning type tuners which can receive broadcast signals different in broadcasting system and/or broadcasting mode such as terrestrial analog broadcasting, terrestrial digital broadcasting, analog broadcasting or digital broadcasting by cable television, and satellite broadcasting, and having an auto preset function for storing broadcast signals received by the tuners in storage means and selecting a desired channel based on preset information stored in the storage means characterized by including control means for controlling each of said tuners, wherein the control means controls said tuners to receive the broadcast signals different in broadcasting system and/or broadcasting mode respectively; wherein the control means controls said tuners to make time shift in performing channel searching so that one of the tuners performs channel searching after another tuner completes channel searching; and wherein when the first channel searching completes, the preset information is stored in storage means, and while channel searching continues afterwards, a broadcast program available for a user to select based on said completed preset information can be viewed.

According to the configuration described in claim 2, when auto preset operation starts, a control unit makes a tuner to perform channel searching of a cable television (digital broadcasting) or terrestrial digital broadcasting after another tuner completes channel searching of terrestrial analog broadcasting. Preset information on terrestrial analog broadcasting on which channel searching is performed by one tuner is written in the storage means. The broadcast receiver can read the preset information on terrestrial analog broadcasting stored in the storage means and display the video from a channel which can be received on a display unit, even when another tuner continues channel searching of terrestrial digital broadcasting, for example.

A broadcast receiver with an auto preset function according to claim 3, is a broadcast receiver including a plurality of electronic tuning type tuners which can receive broadcast signals different in broadcasting system and/or broadcasting mode such as terrestrial analog broadcasting, terrestrial digital broadcasting, analog broadcasting or digital broadcasting by cable television, and satellite broadcasting, and having an auto preset function for storing broadcast signals received by the tuners in storage means and selecting a desired channel based on preset information stored in the storage means characterized by including control means for controlling each of said tuners, wherein the control means can select a simultaneous channel searching mode for controlling each of said tuners to receive said broadcast signals different in broadcasting system and/or broadcasting mode respectively, and a progressive channel searching mode for controlling said tuners to make time shift in performing channel searching so that one of the tuners performs channel searching after another tuner completes channel searching.

According to the configuration described in claim 3, whether to almost simultaneously start channel searching of terrestrial analog broadcasting and channel searching of a cable television (digital broadcasting) or terrestrial digital broadcasting or to shift to channel searching of a cable television (digital broadcasting) or terrestrial digital broadcasting by one of the tuners after channel searching of terrestrial analog broadcasting by another tuner completed is selected and channel searching starts according to the selected channel searching mode.

A broadcast receiver with an auto preset function according to claim 4 is the broadcast receiver with an auto preset function according to any one of claims 1 to 3, characterized in that said broadcast receiver can display channel searching information by one of the tuners on a sub screen when a broadcast program selected based on the preset information on said channel searching is being viewed.

According to the configuration described in claim 4, video received by one of the tuners can be displayed on the display unit and a channel searching state by another tuner can be displayed on the display unit in a form of a two-pane screen for confirmation.

### BRIEF DESCRIPTION OF THE DRAWINGS

FIG. 1 is a block diagram showing an outline of an embodiment of the present invention.
FIG. 2 is a schematic diagram showing a channel searching mode of an embodiment of the present invention, FIG. 2 (A) is a schematic diagram showing a simultaneous channel searching mode, and FIG. 2 (B) is a schematic diagram showing a progressive channel searching mode.
FIG. 3 is a schematic diagram showing a screen for selecting channel searching mode of an embodiment of the present invention.
FIG. 4 is a flowchart showing preset operation in the simultaneous channel searching mode of an embodiment of the present invention.
FIG. 5 is a flowchart showing preset operation in the progressive channel searching mode of an embodiment of the present invention.
FIG. 6 is a schematic diagram showing a channel searching state displayed on a two-pane screen of an embodiment of the present invention.

### DETAILED DESCRIPTION OF THE PREFERRED EMBODIMENTS

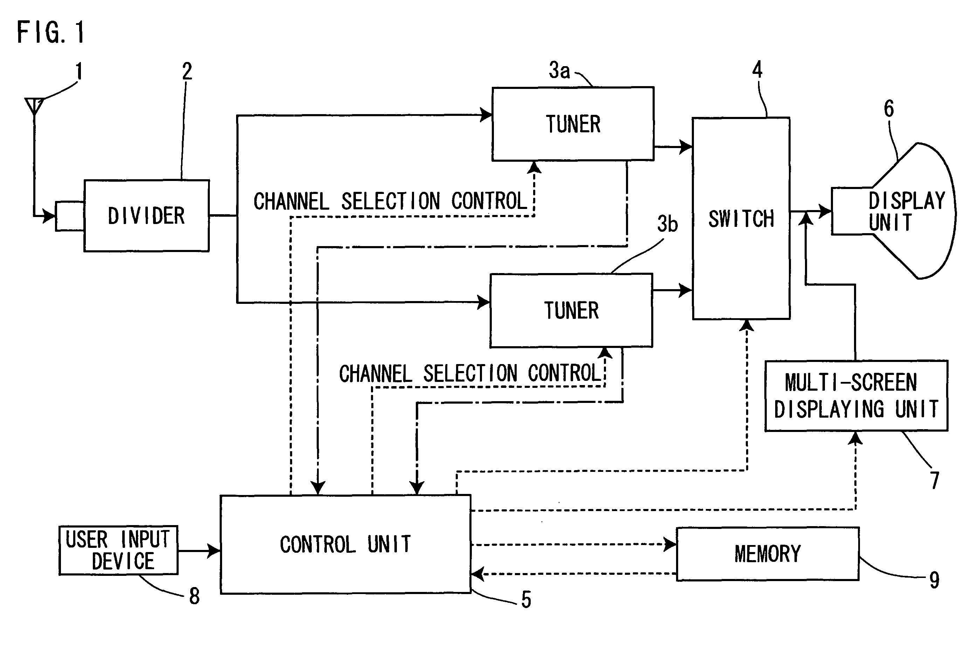

An example as preferred embodiment of the present invention will be described with reference to the FIGS. 1-6. It is a matter of course that the present invention can be easily applied to examples other than that will be described below in the embodiment without departing from the spirit of the invention.

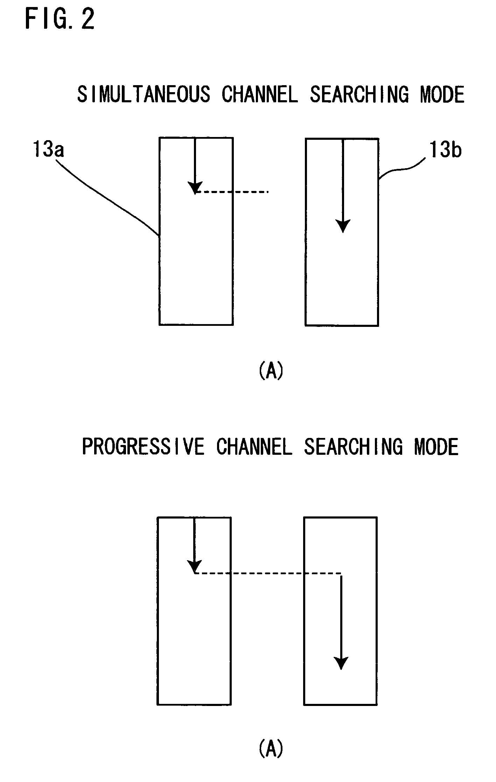

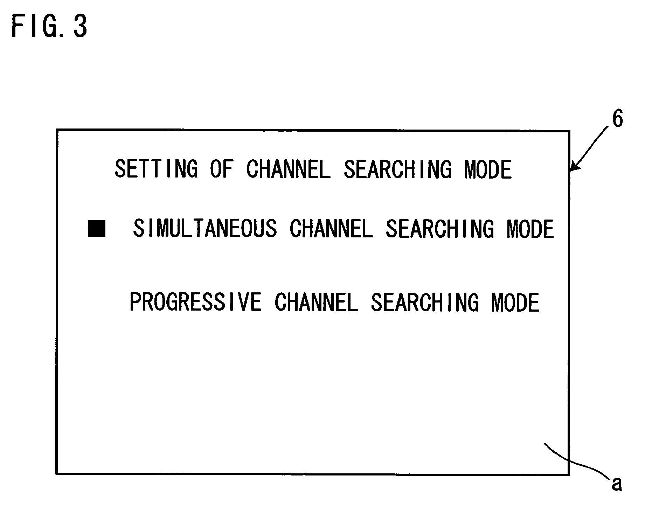

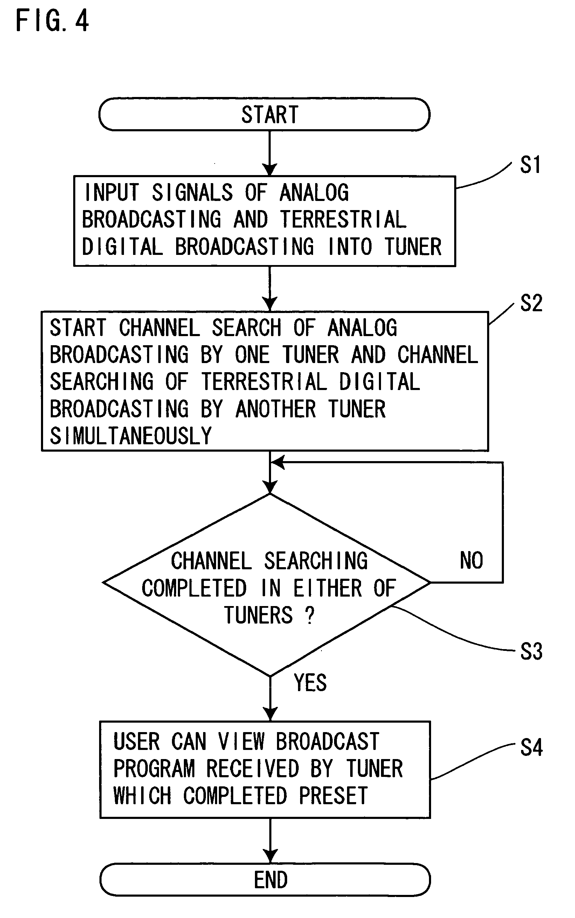

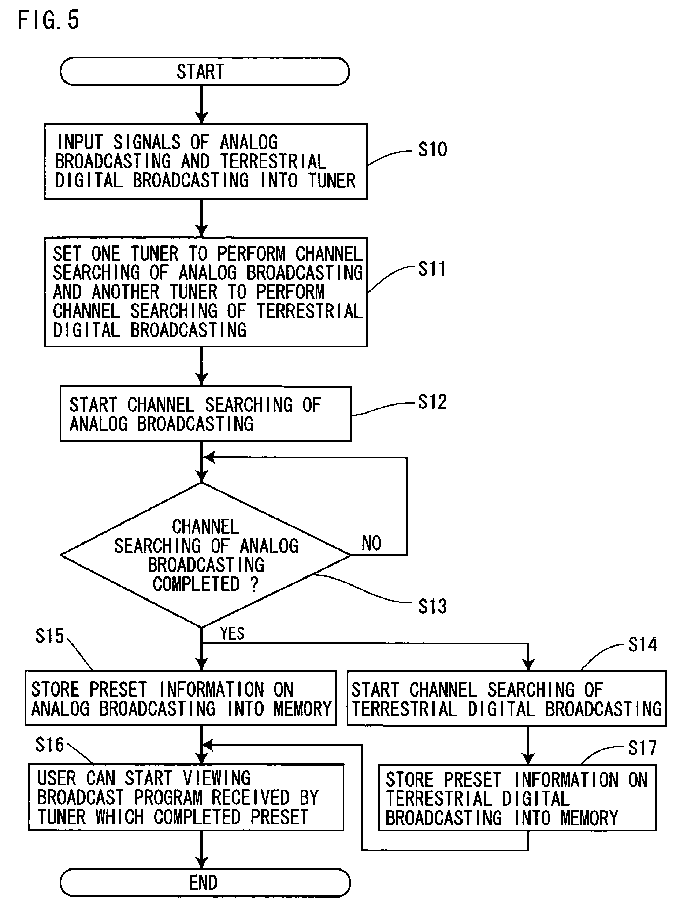

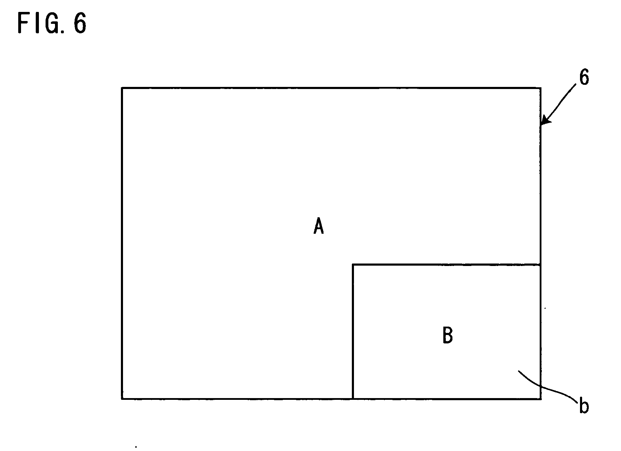

FIGS. 1-6 show an example of the present invention: FIG. 1 is a block diagram showing an outline of the present invention, FIG. 2 is a schematic diagram showing a channel searching mode, FIG. 2 (A) is a schematic diagram showing a simultaneous channel searching mode, FIG. 2 (B) is a schematic diagram showing a progressive channel searching mode, FIG. 3 is a schematic diagram showing a screen for selecting either the simultaneous channel searching mode or the progressive channel searching mode, FIG. 4 is a flowchart showing preset operation in the simultaneous channel searching mode, FIG. 5 is a flowchart showing preset operation in the progressive channel searching mode, and FIG. 6 is a schematic diagram showing a channel searching state displayed on a two-pane screen. In FIG. 1, broadcast signals received by an antenna 1 are supplied from a divider 22 into two tuners 3a and 3b. The tuners 3a and 3b respectively receive and demodulate the broadcast signals from the divider 2 and output video signals and the like. The tuners also switch the video signals and the like outputted from the tuners 3a and 3b by a switch 4 based on channel selection signals from a control unit 5 respectively and display video and the like on a display unit 6.

A multi-screen displaying unit 7 switches display modes based on display setting signals supplied from the control unit 5. When the mode is set to the multi-screen displaying mode, the display unit 6 displays plural videos by video signals outputted from the tuners 3a and 3b simultaneously on a single screen. When the mode is set to the single screen displaying mode, the display unit 6 displays only video by video signals outputted either of the tuners 3a and 3b on a screen. When the mode is set to the multi-video screen display mode, a video A by video signals outputted from either of the tuners 3a and 3b, for example the tuner 3a, and channel searching information of the other tuner 3b can be simultaneously displayed on a single screen by displaying the channel searching information on a sub screen B as shown in FIG. 6.

The control unit 5 is made of a micro-computer and the like. Signals are outputted from a user input device 8 such as an operation unit or a remote control device for a user to operate. Operation information inputted from the user input device 8 is stored in a non-volatile memory 9 as storage means. The non-volatile memory 9 stores various kinds of setting information and the like on a display mode, a video or an audio as well as preset information to be used in the abovementioned channel selection. The control unit 5 generates channel selection signals based on preset information stored in the non-volatile memory 9 to control the channel selection by each of the tuners 3a and 3b. The control unit 5 also controls operation of the television receiver based on various kinds of setting information stored in the non-volatile memory 9.

Now, auto preset operation will be described. For the auto preset operation, two modes are available: a simultaneous channel searching mode for almost simultaneously starting channel searching of terrestrial analog broadcasting (hereinafter referred to as analog broadcasting) by either of the tuners, for example the tuner 3a, and channel searching of a cable television (digital broadcasting) or terrestrial digital broadcasting (hereinafter, represented by terrestrial digital broadcasting as a specific example) by the other tuner 3b as shown in FIG. 2 (A); and a progressive channel searching mode for shifting to channel searching of a terrestrial digital broadcasting by the tuner 3b after channel searching of analog broadcasting by the tuner 3a completes as a shown in FIG. 2 (B) . A mode can be selected from the simultaneous channel searching mode and the progressive channel searching mode on a setting screen "a" shown in FIG. 3.

The preset operation in the simultaneous channel searching mode will be described with reference to a flowchart of FIG. 4. When an auto preset operation starts in response to the auto preset operation inputted from the user input device 8, signals of analog broadcasting and terrestrial digital broadcasting are inputted into the tuner 3a and the tuner 3b from the antenna 1 via the divider 2, and the control unit 5 controls the tuner 3a and the tuner 3b to simultaneously perform channel searching at step S1. In the simultaneous channel searching mode, either of the tuners, the tuner 3a (although the tuner may be either the tuner 3a or the tuner 3b, here the tuner is the tuner 3a for convenience) performs channel searching of terrestrial analog broadcasting, while the other tuner, the tuner 3b is performing channel searching of terrestrial digital broadcasting, for example (step S2). In this manner, the tuner 3a and the tuner 3b searches all the broadcasting channels of terrestrial analog broadcasting and terrestrial digital broadcasting. As the number of broadcasting stations for terrestrial digital broadcasting is over a hundred channels, channel searching of the terrestrial digital broadcasting takes time longer than that for the terrestrial analog broadcasting. Therefore, channel searching of terrestrial analog broadcasting by the tuner 3a completes earlier (step S3). When channel searching of terrestrial analog broadcasting by the tuner 3a completes, the preset information is written in the non-volatile memory 9. The broadcast receiver can display video which can be received by the tuner 3a on the display unit 6 by reading the preset information on analog broadcasting stored in the non-volatile memory 9 when analog broadcasting channels are preset in this manner and controlling the tuner 3a at step S4. As shown in FIG. 6, a user can simultaneously display a video A by video signals outputted from the tuner 3a and channel searching information of the tuner 3b on a single screen for confirmation by displaying the channel searching information on a sub screen B. When channel searching of terrestrial digital broadcasting by the tuner 3b completes afterwards, the preset information on the terrestrial digital broadcasting is written in the non-volatile memory 9 and channel searching of all the broadcasting channels completes. The broadcast receiver has completed the preset. Then, the broadcast receiver switches the switch 4 in accordance with channel searching by the tuners 3a and 3b in response to signals from the control unit 5 so that video received by the tuner 3a or the tuner 3b can be displayed on the display unit 6.

Now, the preset operation in the progressive channel searching mode will be described with reference to a flowchart of FIG. 5. In the progressive channel searching mode, signals of analog broadcasting and terrestrial digital broadcasting are inputted into the tuner 3a and the tuner 3b from the antenna 1 via the divider 2 at step S10, and the control unit 5 makes either the tuner 3a or the tuner 3b, here the tuner 3a (the tuner may be either the tuner 3a or the tuner 3b, here the tuner 3a for convenience) perform channel searching of terrestrial analog broadcasting and makes the other tuner, the tuner 3b perform channel searching of terrestrial digital broadcasting, for example, at step S11, as in the simultaneous channel searching mode. In the progressive channel searching mode, channel searching of terrestrial analog broadcasting by the tuner 3a comes first at step S12. When channel searching of analog broadcasting completes (step S13), the other tuner 3b performs channel searching of terrestrial digital broadcasting (step S14). Preset information on the analog broadcasting on which the tuner 3a performed channel searching at step S13 is written in the non-volatile memory 9 (step S15). The broadcast receiver can display video based on signals received and demodulated by the tuner 3a on the display unit 6 by reading channel selection data stored in the non-volatile memory 9 and controlling the tuner 3a, even if the tuner 3b continues channel searching of terrestrial digital broadcasting (step S16). When channel searching of terrestrial digital broadcasting by the tuner 3b, which is performed after channel searching of terrestrial analog broadcasting by the tuner 3a completes, completes, preset information on the terrestrial digital broadcasting is written in the non-volatile memory 9 (step S17). In this manner, the non-volatile memory 9 stores the preset information on analog broadcasting and terrestrial digital broadcasting. Then, the broadcast receiver switches the switch 4 in accordance with channel searching by the tuners 3a and 3b in response to signals from the control unit 5, and video based on signals received and demodulated by the tuner 3a or the tuner 3b is displayed on a screen of the display unit 6 (step S16).

As mentioned above, when the broadcast receiver performs channel searching for all the broadcast channels of terrestrial analog broadcasting and terrestrial digital broadcasting, it searches the channels simultaneously or progressively by using plural tuners 3a and 3b provided therein for two-pane screen displaying or the like, and stores preset information on channels received by the tuners 3a and 3b in the non-volatile memory 9. In the simultaneous channel searching mode, the broadcast receiver can process channel searching of analog broadcasting and terrestrial digital broadcasting in parallel by using two tuners 3a and 3b. In this case, time spent in channel searching can be reduced by half compared to the case of presetting by a single tuner. When either the tuner 3a or the tuner 3b completes channel searching and the preset information is stored in the non-volatile memory 9 and another channel continues channel searching, the broadcast receiver can display video of a channel which can be received on the display unit 6 by reading the preset information stored in the non-volatile memory 9. Accordingly, a user can view broadcast programs of channels on which channel searching has been completed before channel searching for all the channels completes. Therefore, the broadcast receiver relieves a user of an unwanted waiting time and is effective particularly in terrestrial digital broadcasting with many receiving channels. A user can visually recognize a channel searching state by a tuner on a sub screen B, while viewing a broadcast program received by another tuner. As the user can easily recognize that channel searching completed for all the channels, the user can perform subsequent channel selection smoothly.

Although an embodiment of the present invention has been described in detail, the present invention is not limited to the embodiment and various kinds of modification are possible within the spirit of the present invention. For example, although the embodiment is adapted to enable a user to select a mode from the simultaneous channel searching mode and the progressive channel searching mode, the present invention may be adapted at least to perform channel searching in parallel by using simultaneous channel searching mode. Although the abovementioned embodiment has been described by the example in which channel searching is performed on terrestrial analog broadcasting and terrestrial digital broadcasting, the present invention may be adapted to make plural tuners receive different broadcasting system and/or broadcasting mode such as terrestrial analog broadcasting and analog broadcasting of a cable television or satellite broadcasting, terrestrial analog broadcasting and digital broadcasting or analog broadcasting by a cable television, or terrestrial analog broadcasting and analog broadcasting or digital broadcasting by satellite broadcasting respectively, and enable a user to view a broadcast program available to be selected based on preset information when the first channel searching completes.

As a broadcast receiver with an auto preset function according to claim 1 is a broadcast receiver comprising a plurality of electronic tuning type tuners which can receive broadcast signals different in broadcasting system and/or broadcasting mode such as terrestrial analog broadcasting, terrestrial digital broadcasting, analog broadcasting or digital broadcasting by cable television, and satellite broadcasting, and having an auto preset function for storing broadcast signals received by the tuners in storage means and selecting a desired channel based on preset information stored in the storage means characterized by comprising control means for controlling each of said tuners, wherein the control means controls said tuners to receive said broadcast signals different in broadcasting system and/or broadcasting mode respectively; and wherein the tuners are controlled to almost simultaneously perform channel searching, and when one of said tuners completes channel searching, the preset information is stored in storage means, and when the other channel searching continues, a broadcast program available for a user to select based on the preset information on said completed channel searching can be viewed, the broadcast receiver performs channel searching by using a plurality of tuners in parallel so that auto preset operation can be completed in a short time even for a great number of channels and a broadcast program based on the preset information on the completed channel searching can be viewed even when one of said tuners completes channel searching and when another tuner continues channel searching. This relieves a user of an unwanted waiting time. Therefore, the broadcast receiver is effective particularly in terrestrial digital broadcasting which has a great number of receiving channels.

As a broadcast receiver with an auto preset function according to claim 2 is a broadcast receiver comprising a plurality of electronic tuning type tuners which can receive broadcast signals different in broadcasting system and/or broadcasting mode such as terrestrial analog broadcasting, terrestrial digital broadcasting, analog broadcasting or digital broadcasting by cable television, and satellite broadcasting, and having an auto preset function for storing broadcast signals received by the tuners in storage means and selecting a desired channel based on preset information stored in the storage means characterized by comprising control means for controlling each of said tuners, wherein the control means controls said tuners to receive the broadcast signals different in broadcasting system and/or broadcasting mode respectively; wherein the control means controls said tuners to make time shift in performing channel searching so that one of the tuners performs channel searching after another tuner completes channel searching; and wherein when the first channel searching completes, the preset information is stored in storage means, and while channel searching continues afterwards, a broadcast program available for a user to select based on said completed preset information can be viewed, the broadcast receiver enables a user to view a broadcast program when one of the tuners completes channel searching in the case where the broadcast receiver performs channel searching of terrestrial digital broadcasting which has a great number of channels to be received, for example. This relieves a user of an unwanted waiting time.

As a broadcast receiver with an auto preset function according to claim 3 is a broadcast receiver comprising a plurality of electronic tuning type tuners which can receive broadcast signals different in broadcasting system and/or broadcasting mode such as terrestrial analog broadcasting, terrestrial digital broadcasting, analog broadcasting or digital broadcasting by cable television, and satellite broadcasting, and having an auto preset function for storing broadcast signals received by the tuners in storage means and selecting a desired channel based on preset information stored in the storage means characterized by comprising control means for controlling each of said tuners, wherein the control means can select a simultaneous channel searching mode for controlling said tuners to receive said broadcast signals different in broadcasting system and/or broadcasting mode respectively, and a progressive channel searching mode for controlling said tuners to make time shift in performing channel searching so that one of the tuners performs channel searching after another tuner completes channel searching, a user can select the simultaneous channel searching mode and the progressive channel searching mode as required, and can view a broadcast program which can be received when one of the tuners completes channel searching whichever mode the user selected.

As the broadcast receiver with an auto preset function according to claim 4 is the broadcast receiver with an auto preset function according to any one of claims 1 to 3, characterized in that said broadcast receiver can display channel searching information by one of the tuners on a sub screen when a broadcast program selected based on the preset information on said channel searching is being viewed, a user can visually recognize a state of channel searching being continued while viewing video which can be received.

## Claims

1. A broadcast receiver comprising a plurality of electronic tuning type tuners which can receive broadcast signals different in broadcasting system and/or broadcasting mode such as terrestrial analog broadcasting, terrestrial digital broadcasting, analog broadcasting or digital broadcasting by cable television, and satellite broadcasting, and having an auto preset function for storing broadcast signals received by the tuners in storage means and selecting a desired channel based on preset information stored in the storage means **characterized by** comprising control means for controlling each of said tuners, wherein the control means controls said tuners to receive said broadcast signals different in broadcasting system and/or broadcasting mode respectively; and wherein the tuners are controlled to almost simultaneously perform channel searching, and when one of said tuners completes channel searching, the preset information is stored in storage means, and when the other channel searching continues, a broadcast program available for a user to select based on the preset information on said completed channel searching can be viewed.

2. A broadcast receiver comprising a plurality of electronic tuning type tuners which can receive broadcast signals different in broadcasting system and/or broadcasting mode such as terrestrial analog broadcasting, terrestrial digital broadcasting, analog broadcasting or digital broadcasting by cable television, and satellite broadcasting, and having an auto preset function for storing broadcast signals received by the tuners in storage means and selecting a desired channel based on preset information stored in the storage means **characterized by** comprising control means for controlling each of said tuners, wherein the control means controls said tuners to receive the broadcast signals different in broadcasting system and/or broadcasting mode respectively; wherein the control means controls said tuners to make time shift in performing channel searching so that one of the tuners performs channel searching after another tuner completes channel searching; and wherein when the first channel searching completes, the preset information is stored in storage means, and while channel searching continues afterwards, a broadcast program available for a user to select based on said completed preset information can be viewed.

3. A broadcast receiver comprising a plurality of electronic tuning type tuners which can receive broadcast signals different in broadcasting system and/or broadcasting mode such as terrestrial analog broadcasting, terrestrial digital broadcasting, analog broadcasting or digital broadcasting by cable television, and satellite broadcasting, and having an auto preset function for storing broadcast signals received by the tuners in storage means and selecting a desired channel based on preset information stored in the storage means **characterized by** comprising control means for controlling each of said tuners, wherein the control means can select a simultaneous channel searching mode for controlling said tuners to receive said broadcast signals different in broadcasting system and/or broadcasting mode respectively, and a progressive channel searching mode for controlling said tuners to make time shift in performing channel searching so that one of the tuners performs channel searching after another tuner completes channel searching.

4. The broadcast receiver with an auto preset function according to any one of claims 1 to 3, **characterized in that** said broadcast receiver can display channel searching information by one of the tuners on a sub screen when a broadcast program selected based on the preset information on said channel searching is being viewed.
